# EUROPEAN PATENT SPECIFICATION

(11) **EP 1 607 764 B1**
(45) Date of publication and mention of the grant of the patent: **24.10.2007**
(21) Application number: 05004799.2
(22) Date of filing: 04.03.2005
(51) Int. Cl.: G01S 13/75, G01S 13/76, G06K 19/07

(54) **Reader device, its transmission method, and tag**
Ein Lesegerät, seine entsprechende Übertragungsmethode und ein Kooperierendes HF Etikett
Dispositif de lecture, son procédé de transmission correspondant, et étiquette RF

(30) Priority: 17.06.2004 JP 2004179824
(43) Date of publication of application: 21.12.2005
(73) Proprietor: FUJITSU LIMITED, Kawasaki-shi, Kanagawa 211-8588 (JP)
(72) Inventor: Tanaka, Yoshinori, Kawasaki-shi Kanagawa 211-8588 (JP); Gotoh, Kunihiko, Kawasaki-shi Kanagawa 211-8588 (JP); Yamazaki, Daisuke, Kawasaki-shi Kanagawa 211-8588 (JP)
(74) Representative: HOFFMANN EITLE

(56) References cited:
- EP-A- 0 851 639
- WO-A-00/45328

## Description

The present invention relates to a reader/writer (R/W) device, its communication method, and RF tag. For example, this invention is the reader/writer (R/W) device, its transmission method, and tag for RFID systems that executes multi-level ASK modulation.

Conventionally, RFID communicated with the reader/writer device (herein referred to as a "reader") and RF tag using amplitude modulation signals. The following is an explanation of an example of the conventional reader and RF tag.

Figure 1 shows the configuration of a conventional reader. Figure 2 shows the conventional command format.

Figure 3 shows the wave pattern of the conventional 1-bit Manchester Encoded ASK signal.

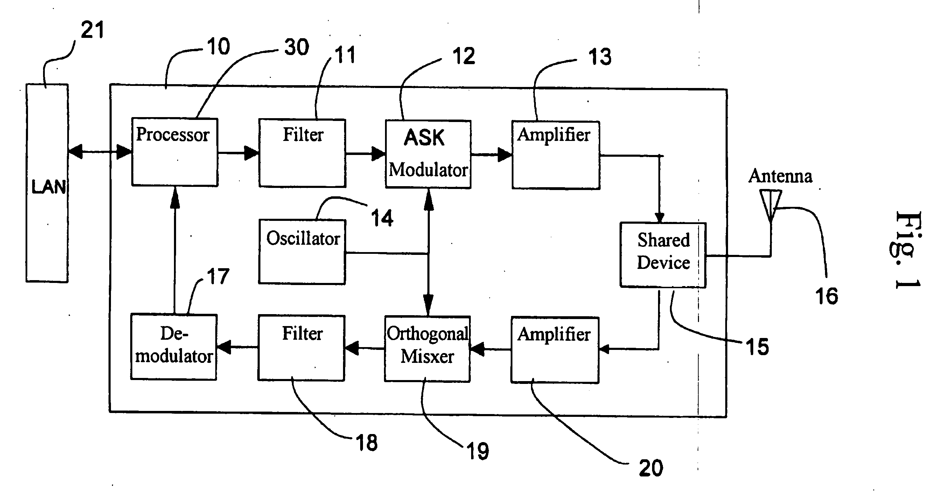

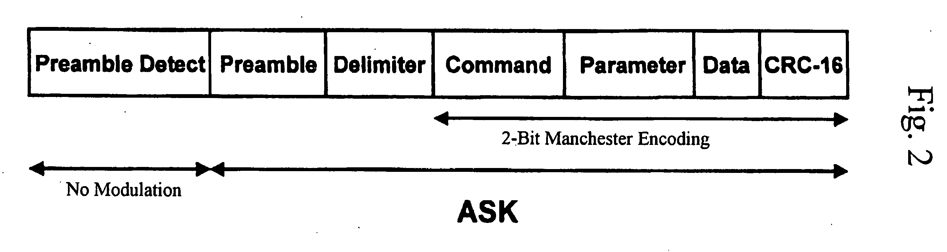

In Figure 1, reader 10 receives information signals from LAN 21 and transmits timing information through processor 30. The command generated by processor 30 or the information signal received from LAN 21 is processed into the data shown in the command format in Figure 2 and output to filter 11. The detailed configuration of processor 30 will be explained later.

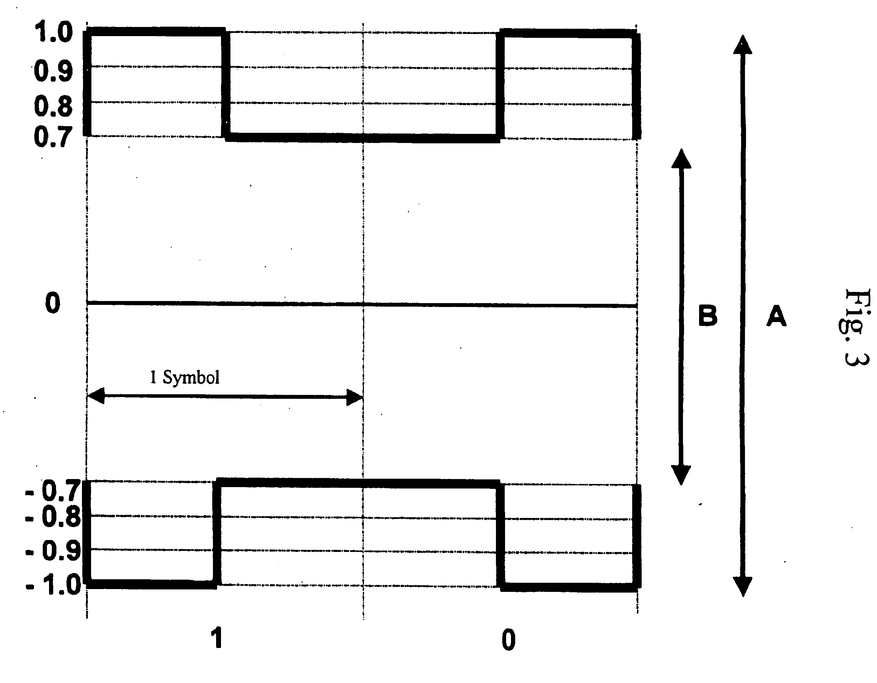

Filter 11 outputs the signal, restricting the bandwidth of data from processor 30 to ASK modulator 12. ASK modulator 12 executes ASK (amplitude shift keying) modulation on the transport signal from oscillator 14 based on the signal from filter 11. The wave pattern of the amplitude-modulated signal (herein referred to as "ASK signal") is shown in Figure 3. In addition, the A and B levels are used in the wave pattern of the ASK signal and the modulation index is represented by (A - B)/(A + B). In addition, in type B of ISO/IEC 18000 Part 6, it is stated that 18% or 100% should be used as the degree of modulation index.

In addition, the ASK signal is amplified with amplifier 13 and is transmitted to the RF tag through the coupling device 15 and antenna 16.

The reception of modulated backscatter signals from the RF tag by the reader is explained in the following using Figure 1. The modulated backscatter signal (herein referred to as "modulated signal") received by antenna 16 is output to down converter 19, through shared device 15 and amplified in amplifier 20. Down converter 19 demodulates the amplified modulated signal to an IF signal by the output of oscillator 14. As filter 18 eliminates high-frequency components with a LPF, the interference between the adjacent channels of the IF signal is controlled. Demodulator 17 demodulates signals from filter 18 into data and outputs them to processor 30. Processor 30 processes demodulated data and outputs data to LAN 21 received from the tag.

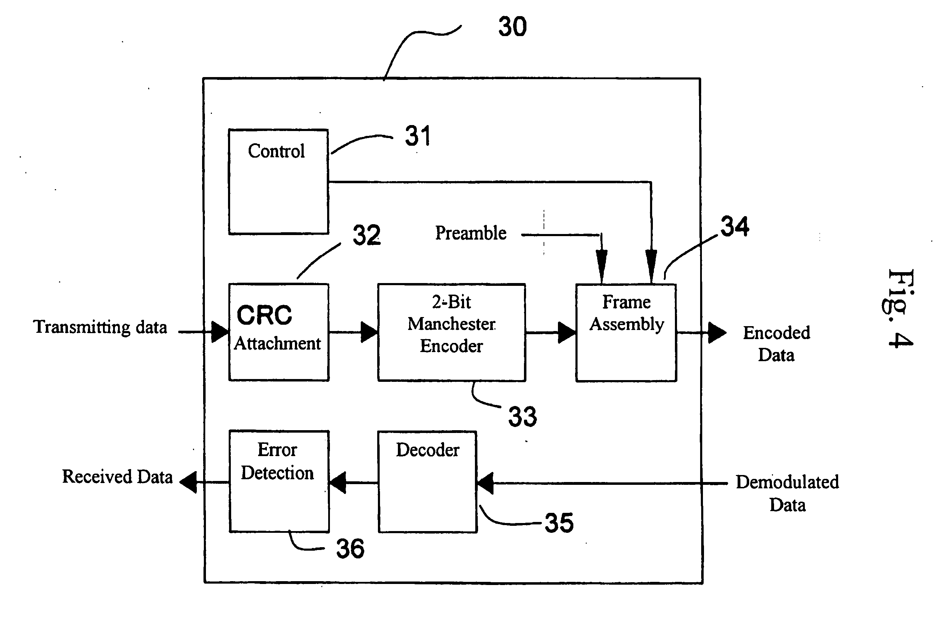

Figure 4 shows the processor configuration of the conventional reader.

In Figure 4, control 31 controls from the upper layer and outputs the control data (refers to the information written to the Delimiter area) of whether to transmit the uplink at a rate of 4-times to the frame assembly 34 from the RF tag. CRC attachment 32 attaches 16 bits for CRC to the command from LAN 21, parameters, and transmission data from the data and outputs to 1-bit Manchester Encoder 33.

The 1-bit Manchester encoder 33 allocates code "1" to the Manchester code "10" of the 1 symbol of the transmission data with 16 bits for CRC attached and allocates code "0" to the Manchester code "01" of the 1 symbol. 1-bit Manchester encoding is executed and a 1-bit Manchester encoded signal is output to the frame assembly 34. The preamble established by the frame assembly 34, for example, is configured by a fixed pattern of 16-bit ALL "0" as the Preamble Detect and 9 bits of Manchester code 0 as the Preamble. The Preamble Detect is necessary to dispatch power to each part of the RF tag before data is demodulated. This allows each part of the RF tag to always be ready to receive before the demodulator receives the necessary data. The preamble pattern is known by the RF tag.

Frame assembly 34 generates frame data with preamble detect, preamble, delimiter and Manchester encoded data. The format of this frame data is shown in Figure 2. In addition, the decoder 35 decodes FM0 encoded signal from demodulator 17 in Figure 1 and outputs to error detector 36. The error detector 36 detects the errors in the decoded data. Processor 30 confirms the contents of the received data. In addition, processor 30 transmits the data received from the tag to LAN 21 of Figure 1.

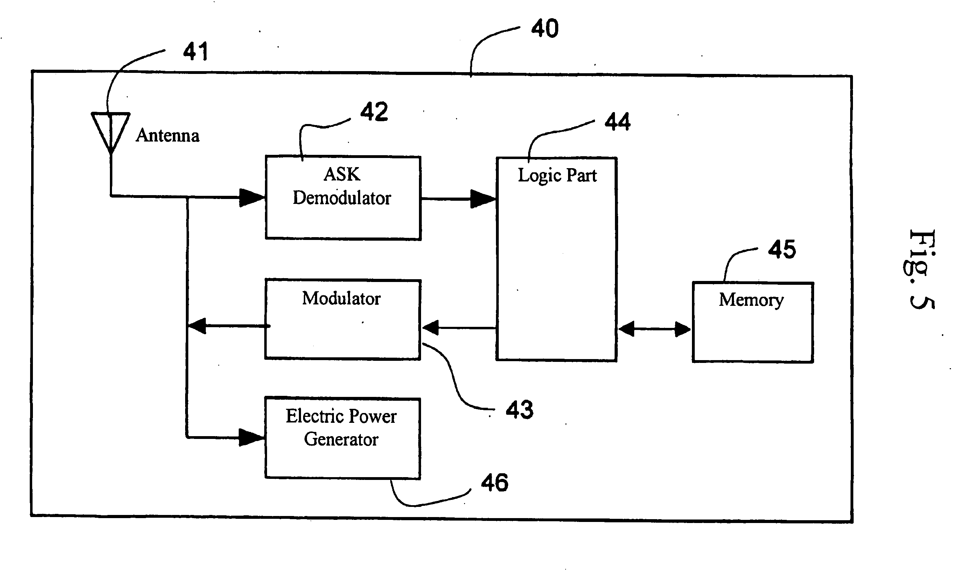

Figure 5 shows the configuration of the conventional RF tag.

In Figure 5, RF tag 40 receives the ASK signal from reader 10 in Figure 1 with antenna 41. Electric power generator 46 generate direct-current voltage by rectifying the signal received by antenna 41. Although this is not illustrated, this direct-current voltage is supplied to each of the parts. ASK demodulator 42 demodulates ASK signals received from antenna 41 and outputs the demodulated Manchester encoded signals to the logic part 44. Logic part 44 decodes the Manchester encoded signals and extract the command data in the decoded data. If the command refers to a write command, the decoded data is written to memory 45. When write is complete, logic part 44 FM0 encodes the ACKNOWLEDGE information. After the data is modulated by modulator 43, this is transmitted to reader 10.

In addition, logic part 44 confirms the details of the command in the demodulated data and if the command refers to a read command, the information stored in the memory 45 corresponding to the address in the parameter is read and is then FM0 encoded. Furthermore, logic part 44 attach the Preamble and CRC bits with the encoded data. After the data is modulated by modulator 43, this is transmitted to reader 10.

The items regarding the configuration of the reader and RF tag in the above are disclosed in Japanese Unexamined Patent Application Publication 2003-158470 and in Published Japanese Translation of a PCT Application 2002-525932

As explained, demodulation of ASK signal is relatively easy and this is why ASK modulation is popular forward link (reader to tag transmission) modulation in RF tag systems. However, efficiency of frequency usage of 1-bit ASK modulation is low.

In addition, the frequency bandwidth allocated to the current UHF-band RFID system is narrow in Japan and Europe, compared to the US. When utilizing multiple adjacent readers, each reader must use a different frequency to avoid the effect of mutual interference. However, if the available frequency range is narrow, there is a problem with the limited number of secured frequency channels as the number of readers available is now also limited. As a result, the RFID is a system with bad efficiency of frequency usage. It is anticipated that cases utilizing multiple adjacent readers will increase in the future. An RFID system with improved efficiency of frequency usage without increasing frequency range is needed.

In addition, the 1-bit Manchester encoded ASK modulation shown in Figure 2 allocates data code "1" to the Manchester code "10" of the 1 symbol and allocates data code "0" to the Manchester code "01" of the 1 symbol. In case of Manchester code "1001," a period of low-level amplitude is generated for 1symbollength duration. Therefore, the voltage supplied to the RF tag from the reader is insufficient and there is a problem with the limitations in the communication range between RF tag and the reader in the RFID system using conventional 1-bit Manchester encoded ASK modulation.

As a result, a system must be constructed with limitations in communication range when the RFID system is used.

In the RFID system, a technology is needed to extend the conventional communication range between the RF tag and the reader.

PCT application WO 00/45328 discloses a data carrier including a receiver for receiving a modulated carrier signal encoded according to an encoding method, the data carrier demodulating and outputting the encoded data signal. The data carrier then decodes the encoded data signal and processes the decoded data.

According to the present invention, there is provided a reader device for wirelessly communicating with an RF tag according to appended independent Claim 1, a transmission method according to appended independent Claim 4, and an RF tag for wirelessly communicating with a reader device according to appended independent Claim 7. Preferred embodiments are defined in the appended dependent claims.

For a better understanding of the invention and to show how the same may be carried into effect, reference will now be made, by way of example, to the accompanying drawings, in which:

Figure 1 illustrates the conventional reader configuration;

Figure 2 illustrates the conventional command format configuration;

Figure 3 illustrates the conventional 1-bit Manchester encoded ASK signal;

Figure 4 illustrates the conventional processor configuration;

Figure 5 illustrates the conventional RF tag configuration;

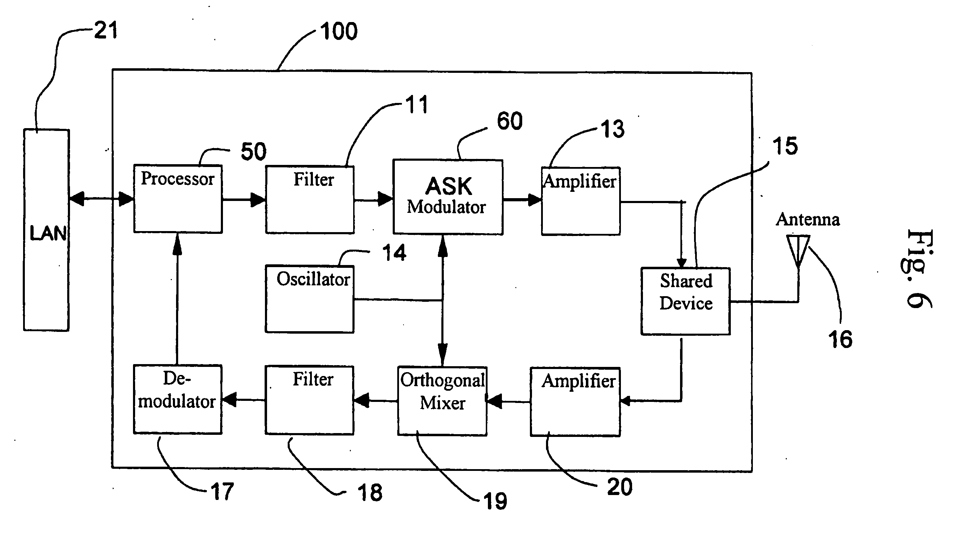

Figure 6 illustrates this invention's reader configuration;

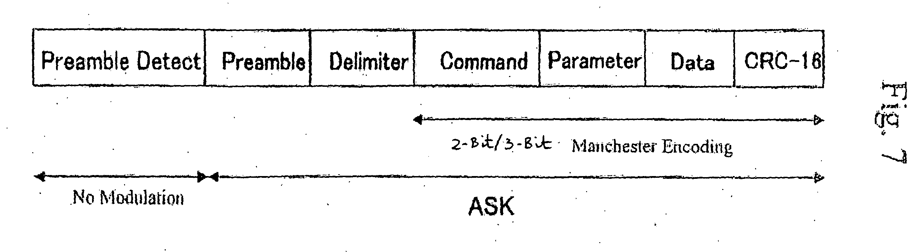

Figure 7 illustrates this invention's first command format configuration;

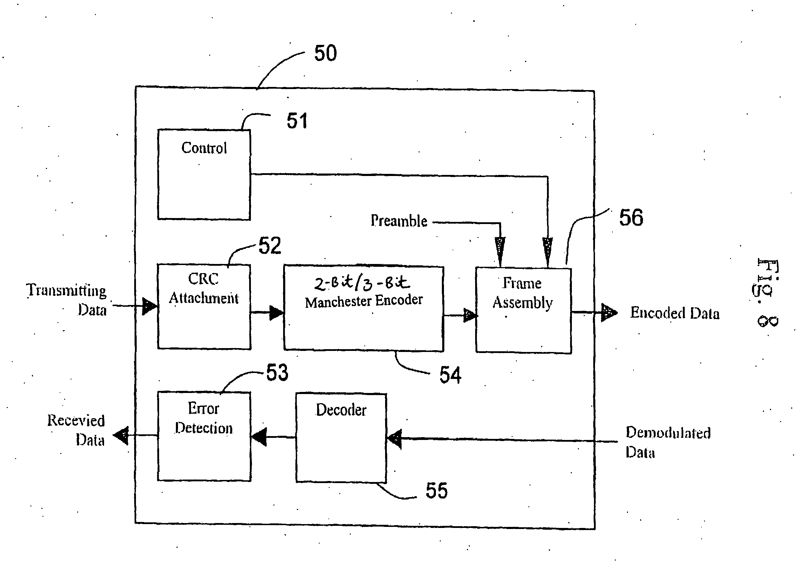

Figure 8 illustrates this invention's processor configuration;

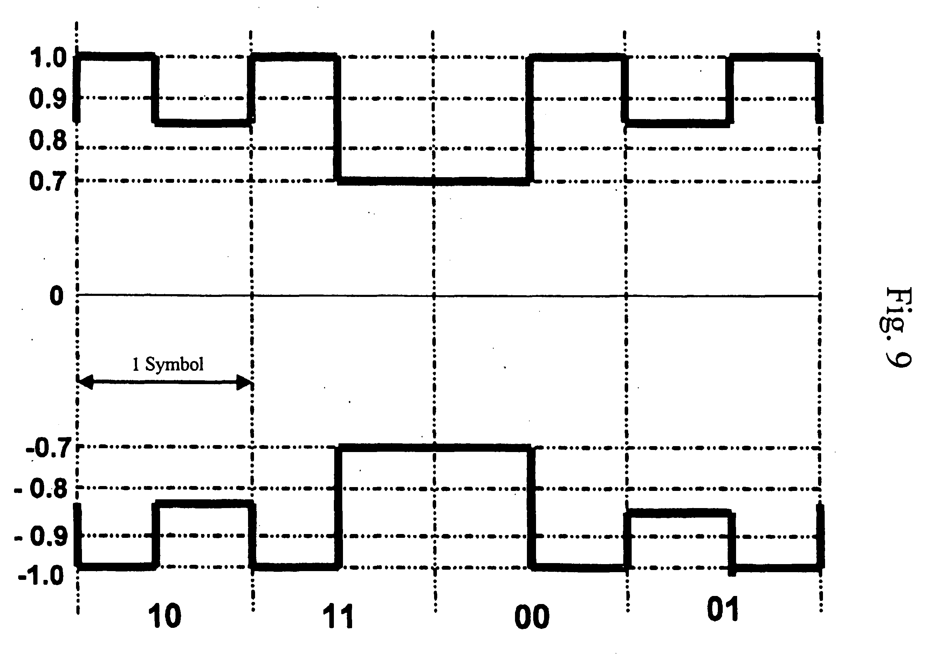

Figure 9 illustrates this invention's 2-bit Manchester encoded ASK signal wave pattern;

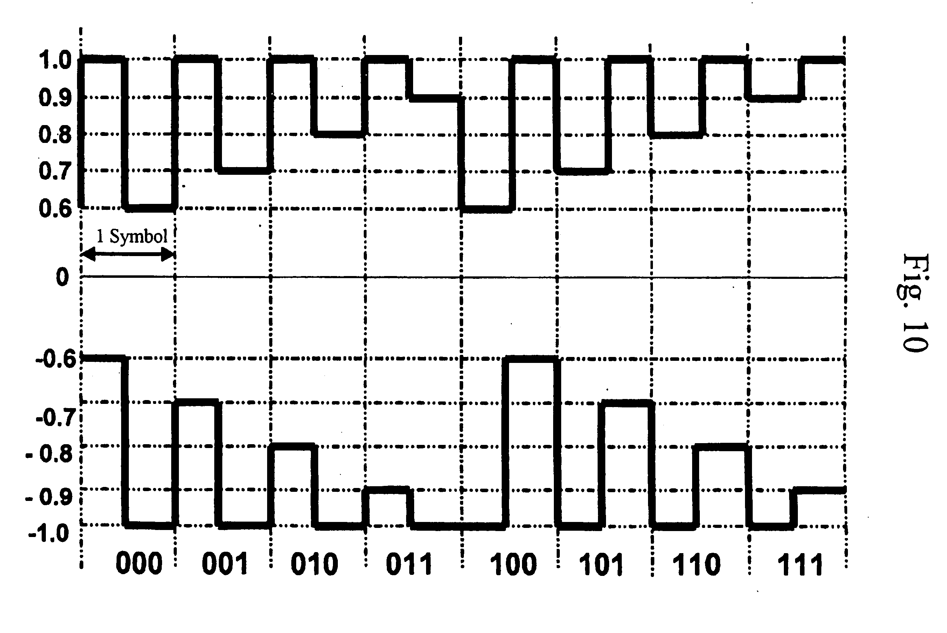

Figure 10 illustrates this invention's 3-bit Manchester encoded ASK signal wave pattern;

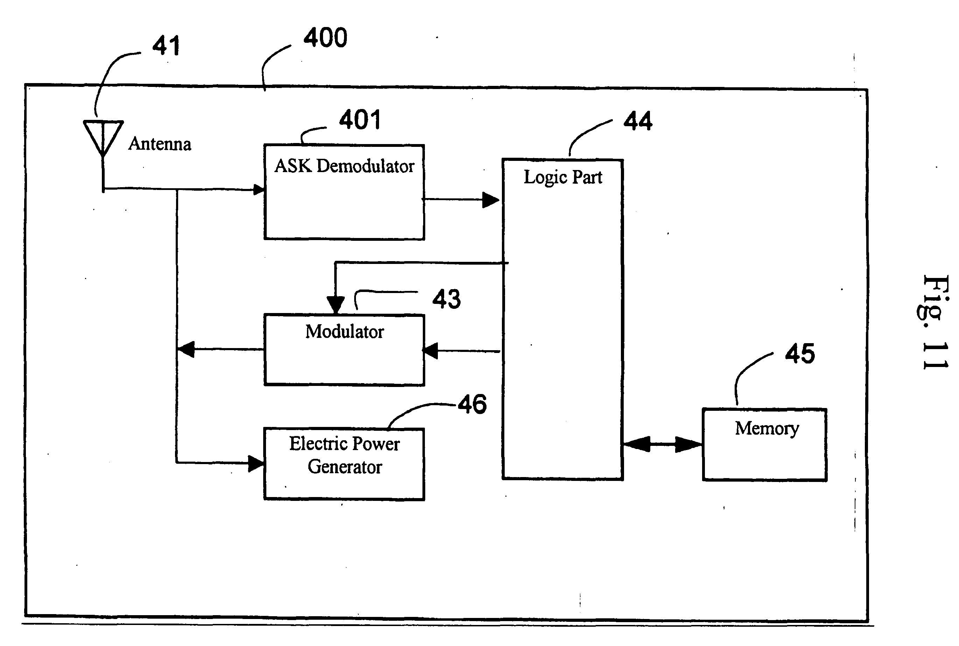

Figure 11 illustrates this invention's RF tag configuration;

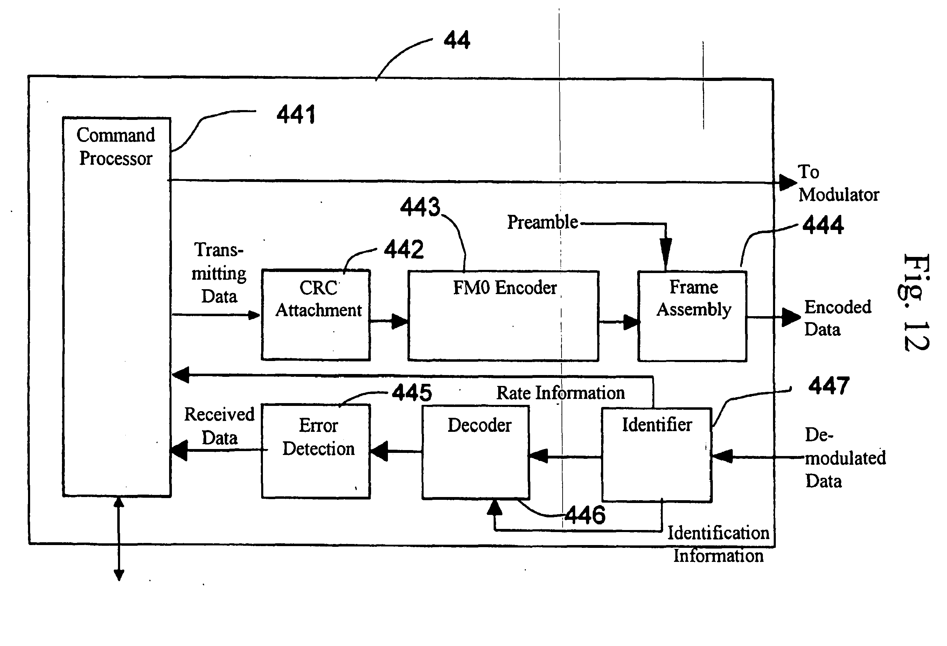

Figure 12 illustrates this invention's RF tag logic part configuration; and

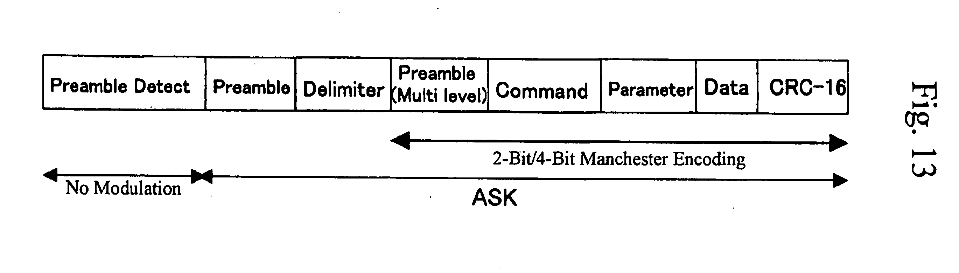

Figure 13 illustrates this invention's second command format configuration.

The present invention advantageously improves the efficiency of frequency usage without increasing bandwidth using wireless communication from the reader to the tag. In addition, the present invention provides a transmission method that improves the power supply efficiency from the reader to the tag to extend the communication distance from the tag to the reader. Also, the present invention provides results that were unavailable to conventional technology resulting from the various configurations of the Best Modes of Practicing the Invention mentioned below. This invention's reader device, communication method, and tag improve the efficiency of frequency usage without increasing bandwidth and make the communication distance from the tag to the reader expandable, compared to conventional means.

In one embodiment of the present invention, a reader device for wirelessly communicating with an RF tag comprises circuitry operable to transmit a wireless signal including information indicating coding method used to the RF tag and circuitry operable to receive and demodulate a wireless signal from the RF tag. The reader device further comprises circuitry operable to each symbol with same peak level of encoded signals, circuitry operable to transmit signals without varying amplitudes of each symbol and to receive, and circuitry operable to demodulate the signal from the tag. An encoding modulation is N-bit Manchester Encoding, wherein N is at least 2. The reader device further comprises circuitry operable to generate a preamble pattern signal and a signal indicating an encoding method of data and circuitry operable to output data attaching the preamble pattern signal and the signal indicating an encoding method of data as transmission data. The reader device further comprises circuitry operable to generate a signal with information indicating the encoding method and circuitry operable to modulate the generated signal. The reader device further comprises circuitry operable to generate a preamble pattern signal, circuitry operable to generate a signal indicating an encoding method of data, and circuitry operable to attach and transmit data to the preamble and the signal indicating an encoding methods of data. The reader device further comprises circuitry operable to offset and transmit constant peak values of each symbol's multi-level signals. The encoding modulation is Manchester Encoding Amplitude Modulation.

In one embodiment of the present invention, an RF tag for wirelessly communicating with a reader device comprises circuitry operable to receive modulated signals attached with information identifying encoding method of Manchester code before modulation, circuitry operable to detect demodulation procedures and information to identify the corresponding encoding method, and circuitry operable to switch the demodulation process in response to the information identifying the encoding method.

Figure 6 shows the configuration of this invention's reader. Figure 7 shows the configuration of this invention's first command format.

In Figure 6, LAN 21 transmits instruction commands or information signals written to tag to the reader's 100 processor 50 and receives timing information from the reader's 100 processor 50. Before processor 50 starts communicating with an RF tag, the protocol processing at the processor's 50 higher layer confirms the RF tag compatible Manchester encoding multi-values (for example, 4-bit) by acquiring the ID of the RF tag. The command generated by processor 50 or the information signal received from LAN 21 is processed into the data shown in the command format in Figure 2 and output to filter 11. The detailed configuration of processor 50 will be explained later.

Filter 11 outputs the signal restricting the bandwidth of data from processor 50 to ASK modulator 60. ASK modulator 60 executes ASK modulation on the transport signal from oscillator 14 based on the signal from filter 11. ASK modulator 60 executes ASK modulation on the data from Preamble Detect, Preamble, Delimiter, Command, Parameter, Data, and CRC-16, shown in Figure 7, from filter 11.

The modulated signal is output to amplifier 13. Amplifier 13 amplifies the modulation signal from ASK modulator 60 and transmits this as a wireless signal to the RF tag through the shared device 15 and antenna 16.

Reader 100 receives the wireless signals from RF tag with the antenna 16. The received wireless signals are amplified at amplifier 20 through shared device 15 and output to down converter 19. Down converter 19 mixes the amplified signal with the transport signal from oscillator 14 and outputs both demodulated signals, I (inphase) and Q (quadrature) signals, to filter 18. Filter 18 eliminates high-frequency components with an LPF and outputs the signal to demodulator 17. Demodulator 17 demodulates the signal from filter 18 to data and outputs to processor 50.

The following is an explanation regarding the operation of processor 50, utilizing the configuration of processor 50 shown in Figure 8.

In Figure 8, control 51 outputs the control signal to frame assembly 56, based on the higher layer instructions of processor 50. After receiving the transmission data, a command generated by the CRC attachment 52 or an information signal from LAN 21, the data is output to 2-bit/3-bit Manchester encoder 54 attaching the CRC 16-bit. In response to the enable and disable signals from processor 50, 2-bit/3-bit Manchester encoder 54 switches between encoding the 2-bit or 3-bit Manchester code and outputs the data to the frame assembly 56. Frame assembly 56 acquires the coded data in the format shown in Figure 7 by attaching the uplink transmission rate information from control 51, delimiter indicating the Manchester encoding method used in the following data part, and Manchester encoded data from the 2-bit/3-bit Manchester encoder 54 to the head of Preamble (Preamble Detect, Preamble).

In addition, the demodulated data is input into decoder 55. Decoder 55 decodes FM0 encoded data demodulated from demodulator 17 and outputs to error detector 53. Error detector 53 utilizes the CRC bit of the decoded data and detects errors. The result of error detection is output with the received data.

Figure 9 shows the wave pattern of this invention's 2-bit Manchester encoded modulation signal. The wave pattern signal in this figure corresponds to the signal output from the ASK modulator 60. This figure shows the waveform signal of each value of the 2-bit and the amplitude value is scaled vertically. The peak value of any value symbol of this wave pattern is equal. However, the amplitudes of wave pattern signals of certain values (for example, Manchester codes "11" and "00") are different from the amplitudes of wave pattern signals of other values (for example, Manchester codes "10" and "01"). This signal is transmitted from the reader to the RF tag and the amplitude components of this signal are utilized as the electrical power supply for the RF tag. Increasing the amplitude value of this signal increases the electrical power supplied to the RF tag. As a result, the transmission distance from the RF tag to the reader can be extended, when compared to conventional means. Comparing "10" of this 2-bit and "1" of the 1-bit, the 1 symbol at the same time as shown in the conventional Figure 3, the power of "10" is 1.5 times that of "1." The communication distance in this comparison is equivalent to the square root of the power ratio, therefore, the distance extends about 1.2 times further than conventional means.

Figure 10 shows the wave pattern of this invention's 3-bit Manchester encoded modulation signal. The wave pattern signal in this figure corresponds to the signal output from the ASK modulator 60 in Figure 6. This figure shows the waveform signal of each value of the 3-bit and the amplitude value is scaled vertically. The peak value of any value symbol of this wave pattern is equal. However, the amplitudes of wave pattern signals of the first value (for example, Manchester codes "000" and "100"), the amplitudes of wave pattern signals of the second value (for example, Manchester codes "001" and "101"), the amplitudes of wave pattern signals of the third value (for example, Manchester codes "010" and "110"), and the amplitudes of wave pattern signals of the fourth value (for example, Manchester codes "011" and "111") are all different.

This signal is transmitted from the reader to the RF tag and the amplitude components of this signal are utilized as the electrical power supply at the RF tag. Increasing the amplitude of this signal increases the electrical power supplied to the RF tag. As a result, the transmission distance from the RF tag to the reader can be extended, when compared to conventional means.

Figure 11 shows the configuration of this invention's RF tag. Figure 12 shows the configuration of this invention's RF tag logic part.

RF tag 400 receives wireless signals from reader 100 by antenna 41. The signals received by antenna 41 are output to ASK demodulator 401 and power generator 46. Although power generator 46 has not been illustrated in detail, the power is rectified by a rectifier generating a direct-current voltage and supplied to each circuit part. ASK modulator 401 demodulates the received data and transmits the demodulated data to logic part 44.

The operation of logic part 44 is explained in the following using Figure 12.

Identifier 447, in logic part 44, acquires the demodulated data shown in 3 Figure 7, and identifies the Manchester encoding method as either 2-bit or 3-bit by the Delimiter (identifying information). This also identifies whether the information to increase the transmission rate of return link to 4-times is written. If the 2-bit Manchester encoding is applied in the following part, the identifying information is transmitted to decoder 446. If the information specifies an increase in transmission rate of return link to 4-times, the information is transmitted to command processor 441. Furthermore, identifier 447 outputs only the demodulated data up to the Delimiter and subsequent data not including the header, Command, Parameter, Data, and CRC-15 information to decoder 446. As identifier 447 identifies the contents of the Delimiter, decoder 446 outputs the Command, Parameter, Data, and CRC-15 decoded information to error detector 445, based on the identifying information indicating the encoding method. Specifically, if the identifying information is 2-bit Manchester encoding, the subsequent data is coded by 2-bit Manchester encoding and the data is decoded as a 2-bit Manchester encoded signal by decoder 446. In addition, if the information is not 2-bit Manchester code, decoder 446 decodes the information as a 3-bit Manchester encoded signal. Error detector 454 detects any errors in the data utilizing CRC bits in the data after it has been decoded.

Furthermore, error detector 445 outputs the received data to command processor 441. Command processor 441 identifies the command contents. If the command refers to a read command, this is compared to the ID in the parameter and memory 45 (not shown in Fig.12) following the command. If these match, the information stored in the memory 45 corresponding to the address in the parameter is read. If information specifying the increase of return link transmission rate to 4-times from identifier 447 is received by command processor 441, the transmission rate is increased by modulator 43 to 4-times.

The following explains the transmission process of RF tag.

CRC attachment 442 attaches a CRC bit to the transmitting data read from command processor 441 and outputs the signal to FM0 encoder 443. FM0 encoder 443 encodes the signal attached to the CRC bit as an FM0 and attaches a Preamble at frame assembly 444. This is output to modulator 43 as encoded data. Modulator 43 modulates the encoded data and transmits it to reader 10.

In addition, regarding command processor 441, error detector 445 utilizes CRC 16-bit to detect errors in the decoded CRC-16 data. Command processor 441 identifies the command contents in the received data. If the command refers to a write command to the RF tag's memory 45, this is compared to the ID in the parameter and memory 45 following the command. If these match, the data following the parameter in the address of the parameter is written in memory 45.

Figure 13 shows the configuration of the second command fonnat.

Figure 13 explains items differing from the first command format in Figure 7.

This format has added a Multilevel preamble after Delimiter.

This multilevel preamble can be used to adjust the optimum threshold level for detecting multilevel signal shown in Figure 9. For example, based on the wave patterns in Figure 9, the information indicating the threshold of the individual data ID are transmitted in the order of Manchester codes "00," "01," "10," and "11."

The above was an explanation of Manchester encoding. If the encoding process utilizes differential Manchester codes and the decoding timing is off, decoding is still possible.

In the Best Modes of Practicing the Invention mentioned above, the ASK modulation was explained. However, other modulation formats, such as, QPSK and QAM can be utilized and in addition to 2-bit and 3-bit Manchester encoding.

Although specific embodiments of the present invention have been described, it is to be understood that the invention is not to be limited by the specific illustrated embodiments, but only by the scope of the appended claims.

## Claims

1. A reader device (100) for wirelessly communicating with an RF tag (400), comprising:
first circuitry (50, 11, 60, 13, 15, 16) operable to transmit to said RF tag (400) a first wireless signal including data and information indicating a Manchester encoding method to be used; and
second circuitry (15-20) operable to receive and demodulate a second wireless signal from the RF tag,
**characterized by**:
said included data comprising a plurality of data symbols, each having multi-level signal; and
said first circuitry (50, 11, 60, 13, 15, 16) being further operable to generate said multi-level signals by multi-level Manchester encoding each of said plurality of data symbols with a predetermined peak level.

2. The reader device of claim 1, wherein said first circuitry including encoding means (54) operable to encode each of said plurality of data symbols as N-bit Manchester encoding, wherein N is at least 2.

3. The reader device of claim 1 or 2, wherein
said first circuitry (50, 11, 60, 13, 15, 16) being further operable to offset levels of said multi-level signals such that amplitudes of multi-level signals of certain symbols are different from amplitudes corresponding to other symbols.

4. A transmission method comprising:
generating a signal including data and information indicating a Manchester data encoding method to be used;
modulating said generated signal ASK;
generating a preamble pattern signal (Preamble Detect); and
outputting a transmission signal comprising said preamble pattern signal and said modulated signal,
**characterised by**:
said included data comprising a plurality of data symbols, each having a multi-level signal; and
by multi-level Manchester encoding each of said plurality of data symbols with a predetermined peak level.

5. A method, according to Claim 4, wherein said multi-level Manchester encoding involves N-bit Manchester Encoding, where N is at least 2.

6. A method, according to Claim 4 or 5, further comprising:
offsetting levels of said multi-level signals such that amplitudes of multi-level signals of certain symbols are different from amplitudes corresponding to other symbols.

7. An RF tag (400) for wirelessly communicating with a reader device (100), comprising:
circuitry (401) operable to receive a modulated signal including data and information indicating a multi-level N-bit Manchester code encoding method used by said included data, where N is at least 2, said information being attached before said included data;
circuitry (447) operable to detect said information indicating said multi-level N-bit Manchester encoding method; and
circuitry (446) operable to select which demodulation process for said multi-level N-bit Manchester encoding method is to be used in response to said detected information.

## Patentansprüche

1. Eine Lesevorrichtung (100) zum drahtlosen Kommunizieren mit einem RF-Etikett (400), umfassend:
einen ersten Schaltkreis (50, 11, 60, 13, 15, 16), der betriebsfähig ist zum Übertragen zu dem RF-Etikett (400) eines ersten Funksignals, das Daten und Informationen enthält, die ein Manchester-Codierverfahren angeben, das zu verwenden ist; und
einen zweiten Schaltkreis (15-20), der betriebsfähig ist zum Empfangen und Demodulieren eines zweiten Funksignals von dem RF-Etikett,
**dadurch gekennzeichnet,**
**dass** die enthaltenen Daten eine Vielzahl von Datensymbolen umfassen, die jedes ein Multi-Level-Signal aufweist; und
**dass** der erste Schaltkreis (50, 11, 60, 13, 15, 16) ferner betriebsfähig ist zum Erzeugen der Multi-Level-Signale durch Multi-Level-Manchester-Codierung jedes der Vielzahl der Datensymbole mit einem vorbestimmten Spitzenlevel.

2. Die Lesevorrichtung nach Anspruch 1, wobei der erste Schaltkreis eine Codierungseinrichtung (54) enthält, die betriebsfähig ist zum Codieren jedes der Vielzahl der Datensymbole als N-Bit Manchester-Codierung, wobei N mindestens 2 ist.

3. Die Lesevorrichtung nach Anspruch 1 oder 2, wobei der erste Schaltkreis (50, 11, 60, 13, 15, 16) ferner betriebsfähig ist zum Versetzen von Levels der Multi-Level-Signale, so dass Amplituden der Multi-Level-Signale von bestimmten Symbolen sich in den Amplituden unterscheiden, die mit anderen Symbolen korrespondieren.

4. Ein Übertragungsverfahren, umfassend:
Erzeugen eines Signals, das Daten und Information enthält, die ein zu verwendendes Manchester-Daten-Codierverfahren angeben;
Modulieren des erzeugten Signals (ASK);
Erzeugen eines Einleitungsmustersignals (Einleitungsdetektierung); und
Ausgeben eines Übertragungssignals, umfassend das Einleitungsmustersignal und das modulierte Signal,
**dadurch gekennzeichnet,**
**dass** die enthaltenen Daten eine Vielzahl von Datensymbolen umfassen, wobei jedes ein Multi-Level-Signal aufweist; und
**dass** die Multi-Level-Signale erzeugt werden durch Multi-Level-Manchester-Codierung von jedem der Vielzahl der Datensymbole mit einem vorbestimmten Spitzenlevel.

5. Ein Verfahren nach Anspruch 4, wobei die Multi-Level-Manchester-Codierung N-Bit Manchester-Codierung involviert, wobei N mindestens 2 ist.

6. Ein Verfahren nach Anspruch 4 oder 5, ferner umfassend Versetzen von Niveaus der Multi-Level-Signale, so dass Amplituden der Multi-Level-Signale von bestimmten Signalen sich von Amplituden unterscheiden, die mit anderen Symbolen korrespondieren.

7. Ein RF-Etikett (400) zum drahtlosen Kommunizieren mit einer Lesevorrichtung (100), umfassend:
einen Schaltkreis (401), der betriebsfähig ist zum Empfangen eines modulierten Signals, das Daten und Information enthält, die ein Multi-Level N-Bit-Manchestercode-Codierungsverfahren angeben, das von den enthaltenen Daten verwendet wird, wobei N mindestens 2 ist, wobei die Information angefügt wird vor den enthaltenen Daten;
einen Schaltkreis (447), der betriebsfähig ist zum Detektieren der Information, die das Multi-Level N-Bit Manchester-Codierungsverfahren angibt; und
einen Schaltkreis (446), der betriebsfähig ist zum Auswählen, welcher Demodulierungsprozess für das Multi-Level N-Bit Manchester-Codierungsverfahren zu verwenden ist, in Reaktion auf die detektierte Information.

## Revendications

1. Dispositif de lecture (100) destiné à une communication sans fil avec une étiquette à haute fréquence HF (400), comprenant :
un premier circuit (50, 11, 60, 13, 15, 16) pouvant être mis en oeuvre pour émettre vers ladite étiquette HF (400) un premier signal sans fil comprenant des données et des informations indiquant un procédé de codage Manchester à utiliser, et
un second circuit (15 à 20) pouvant être mis en oeuvre pour recevoir et démoduler un second signal sans fil à partir de l'étiquette HF,
**caractérisé par** :
lesdites données incluses comprenant une pluralité de symboles de données, chacun ayant un signal à niveaux multiples, et
ledit premier circuit (50, 11, 60, 13, 15, 16) pouvant en outre être mis en oeuvre pour générer lesdits signaux à niveaux multiples par un codage Manchester à niveaux multiples de chaque symbole de la pluralité de symboles de données avec un niveau de crête prédéterminé.

2. Dispositif de lecture selon la revendication 1, dans lequel ledit premier circuit comprenant un moyen de codage (54) pouvant être mis en oeuvre pour coder chacun de ladite pluralité de symboles de données sous la forme d'un codage Manchester à N bits, où N vaut au moins 2.

3. Dispositif de lecture selon la revendication 1 ou 2, dans lequel
ledit premier circuit (50, 11, 60, 13, 15, 16) pouvant en outre être mis en oeuvre pour décaler les niveaux desdits signaux à niveaux multiples de sorte que les amplitudes des signaux à niveaux multiples de certains symboles soient différentes des amplitudes qui correspondent à d'autres symboles.

4. Procédé de transmission comprenant :
la génération d'un signal comprenant des données et des informations indiquant un procédé de codage de données Manchester à utiliser,
la modulation dudit signal généré (ASK),
la génération d'un signal de séquence de préambule (détection de préambule), et
la fourniture en sortie d'un signal de transmission comprenant ledit signal de séquence de préambule et ledit signal modulé,
**caractérisé par** :
lesdites données incluses comprenant une pluralité de symboles de données, chacune ayant un signal à niveaux multiples, et lesdits signaux à niveaux multiples étant générés par un codage Manchester à niveaux multiples de chaque symbole de ladite pluralité de symboles de données avec un niveau de crête prédéterminé.

5. Procédé selon la revendication 4, dans lequel ledit codage Manchester à niveaux multiples implique un codage Manchester à N bits, où N vaut au moins 2.

6. Procédé selon la revendication 4 ou 5, comprenant en outre :
le décalage de niveaux desdits signaux à niveaux multiples de sorte que les amplitudes des signaux à niveaux multiples de certains symboles soient différentes des amplitudes qui correspondent à d'autres symboles.

7. Etiquette HF (400) en vue d'une communication sans fil avec un dispositif de lecture (100), comprenant :
un circuit (401) pouvant être mis en ouvre pour recevoir un signal modulé comprenant des données et des informations indiquant un procédé de codage à code de Manchester à N bits à niveaux multiples utilisé par lesdites données incluses, où N vaut au moins 2, lesdites informations étant rattachées avant lesdites données incluses,
un circuit (447) pouvant être mis en oeuvre pour détecter lesdites informations indiquant ledit procédé de codage Manchester à N bits à niveaux multiples, et
un circuit (446) pouvant être mis en oeuvre pour sélectionner quel procédé de démodulation pour ledit procédé de codage Manchester à N bits à niveaux multiples doit être utilisé en réponse auxdites informations détectées.
